# EUROPÄISCHE PATENTANMELDUNG

(11) **EP 2 312 797 A1**
(43) Veröffentlichungstag der Anmeldung: **20.04.2011**
(21) Anmeldenummer: 10013403.0
(22) Anmeldetag: 07.10.2010
(51) Int. Cl.: H04L 12/40

(54) **Druckmaschine mit einem Datennetzwerk**

(30) Priorität: 14.10.2009 DE 102009045654
(71) Anmelder: Manroland AG, 63075 Offenbach am Main (DE)
(72) Erfinder: Leißner, Stefan, 08523 Plauen (DE); Liebold, Rainer, 08527 Plauen (DE); Wolfrat, Robert, Dr., 95497 Goldkronach (DE)
(74) Vertreter: Ulrich, Thomas

(57) **Zusammenfassung**

Die Erfindung betrifft ein Datennetzwerk für eine Druckmaschine, wobei Subnetzwerke über einen Hauptringbus miteinander in Verbindung stehen.

## Beschreibung

Die Erfindung betrifft eine Druckmaschine, insbesondere

Rollenrotationsdruckmaschine mit einem Datennetzwerk zur Übertragung von Antriebsfunktionen und Druckmaschinensteuerungsparametern sowie die Übertragung von Kommunikations- und/oder Servicedaten.

### Stand der Technik

Bei einer Druckmaschine sind eine Vielzahl von Steuer- und Regelungseinheiten über die Anlage verteilt, wobei einige von ihnen mittels Glasfaseroptik bzw.

Funktechnologie miteinander vernetzt sind. Der aktuelle Zustand bei Druckmaschinen ist, dass mehrere nicht miteinander kompatible Regelungs- und Steuerungssysteme nebeneinander vorhanden sind, wobei jedes Automatisierungssystem, beispielsweise der Druckturm einer Druckmaschine, eine separate Verkabelung und eine separate Interface-Technik bzw. Bus-Technik zum Leitstand der Druckmaschine aufweist.

Zur Herstellung von Druckmaschinen für z. B. den Zeitungsdruck entsteht somit ein hoher Einzelverkabelungsaufwand und die leittechnischen sowie softwaregestützten Anforderungen für die elektronische bzw. elektromechanische Überwachung von einem übergeordneten Leitstand/-system zur Druckmaschinenanlagensteuerung sind komplex in ihrer elektronischen und elektromechanischen Regelung und Steuerung auszuführen.

Der Erfindung liegt die Aufgabe zugrunde, die vorgenannten Probleme zu mindern.

Diese Aufgabe wird gelöst durch ein Daten-Steuerungs-Netzwerk, das wenigstens zwei voneinander getrennte autonome Subnetzwerke aufweist, die über einen zentralen Ringbus in redundanter Auslegung miteinander in Verbindung stehen.

Die Erfindung löst somit die eingangs gestellte Aufgabe durch die Zusammenführung der Automatisierungsebenen einer Druckmaschine im Sinne eines integrierten Systems für alle steuer- und regelungstechnischen Aufgaben umfassend das Anfahren der Druckmaschine, die kontinuierliche oder diskontinuierliche Produktion von Druckprodukten sowie beispielhaft das gezielte Herunterfahren der Druckmaschine mit ihren jeweiligen Anlagenkomponenten in einen Stand-by-Betrieb.

Durch das erfindungsgemäße integrierte Datennetzwerk- und Automatisierungssystem werden alle Steuerungs-, Regelungs- und Sicherheitssysteme der Druckmaschine vorteilhaft für das Anlagenbedienerpersonal via Leitstand - auch virtuellem Leitstand - besser bedien- und beobachtbar im Sinne einer optimierten Mensch-Maschine-Interaktion.

Das Daten-Steuerungs-Netzwerk enthält zudem Mittel zum

Sicherheitsmanagement, zur präventiven Wartung der Druckmaschine und zur Ansteuerung von Servicefunktionen der Druckmaschine sowie zum intelligenten Datenmanagement für bspw. die Anlagenzustandsdiagnose und Wartungs-/Servicezwecke.

Das Bedienpersonal der Druckmaschine erhält somit ständigen Zugriff zu allen Betriebs-/Zustandsinformationen sowie Wartungs- und Serviceinformationen der Druckmaschine und den damit hergestellten Druckprodukten.

Dies umfasst beispielhaft auch die Nachladung mit Bedruckungsmaterial wie Papierrollen für den kontinuierlichen Druckbetrieb. Dadurch wird einerseits der Sicherheitsstandard der Druckmaschine erhöht sowie der Informationszustand über die Druckmaschine im Betrieb verbessert.

Datennetzwerke im Sinne der Erfindung sind verbundene Subnetzwerke für unterschiedliche Aufgaben der Druckmaschinensteuerung, wobei die Subnetzwerke bzw. die Automatisierungssubsysteme zudem autark und redundant ausgelegt sind, so dass im Falle einer lokalen betrieblichen Störung die Funktionalität des Gesamtnetzwerkes bzw. des Gesamtautomatisierungssystems der Druckmaschine nicht eingeschränkt wird.

Damit wird unter anderem vorteilhaft erreicht, dass die Subnetzwerke und somit die Automatisierungssubsysteme der Druckmaschine unabhängig von einer höheren leittechnischen Ebene ihre Arbeitsweise eigenständig beibehalten können.

Jedes Subnetzwerk der Druckmaschine weist zudem eine eigenständige unterbrechungsfreie Strom- (USV) und/oder Notstromversorgung aus, so dass eine bedarfsgerechte Strom-Spannungs-Versorgung der jeweiligen Anlagenkomponente der Druckmaschine gewährleistet ist.

Mit dem erfindungsgemäßen Datennetzwerk ist ein Kommunikationssystem für eine Druckmaschine bereitgestellt, das einerseits eine verbesserte und sichere Automatisierung der Antriebe einer Druckmaschine schafft und andererseits das sichere An- oder Abfahren der Druckmaschinenanlage im Falle von lokalen Störungen in Teilkomponenten und unabhängig vom restlichen Anlagenzustand der Druckmaschine gewährleistet.

Durch die redundante Auslegung des Druckmaschinendatennetzwerks in voneinander getrennte Subnetzwerke, die über einen Hauptringbus miteinander in elektronischer bzw. elektrooptischer Wirkverbindung stehen, werden auch die neuen Maschinenrichtlinien der Europäischen Union vorteilhaft erfüllt.

Die Subnetzsysteme zur Steuerung und Regelung der Druckmaschine mit ihren jeweiligen Druckmaschinenteilkomponenten werden jeweils über parametrierbare Netzwerkschalter wie einem Switch, der beispielhaft als Ethernet-Switch mit einem elektro-optischen Ringbus in Verbindung steht, ausgelegt.

Im Falle eines Druckmaschinenstörfalls durch einen Ausfall des Hauptringbusses der Druckmaschine wird durch die Zuschaltung eines parametrierbaren Ringbusmanagers gewährleistet, dass die logischen Steuerungs- und Regelungsfunktionen sowie -befehle zur Ansteuerung der jeweiligen Druckmaschinenkomponente physikalisch an der jeweiligen Maschinenkomponente anstehen und die Druckmaschine somit nicht in einen unkontrollierbaren Zustand überführt wird .

Der Ringbusmanager übernimmt somit eine Wächterfunktion für den Fall, dass eine Unterbrechung des (Haupt-)Ringbusses durch äußere Störeinflüsse erfolgt.

Mittels der autarken und redundant ausgelegten Subnetzwerke lässt sich die Druckmaschine selbst bei Ausfall des Hauptringbusses bzw. bei Ausfall einer übergeordneten leittechnischen Ebene der Druckmaschine sicher bedienen.

Zur Verbesserung der Sicherheit der Druckmaschine ist jeder Druckturm in einer jeweiligen Druckebene mit einem autark und redundant ausgelegten Subnetzwerk für die elektronische bzw. elektro-optische Steuerung, Regelung und Überwachung desselben ausgelegt.

Für die Ausgestaltung der jeweiligen Subnetzwerke der

Druckmaschinenkomponenten kommen abhängig von der gewählten Netzwerktopologie sowie der Leistungsfähigkeit AS-Interface, Profibus DP, Profibus, Instabus und Industrial Ethernet in Frage, die bspw. über Lichtwellenleiter mit dem Hauptringbus verbunden sind.

Vorzugsweise verfügt jedes der Subnetzwerke der Druckmaschinenkomponente über eine eigenständige und unterbrechungsfreie Stromversorgung (USV); dies gewährleistet die Stromversorgung des jeweiligen Subnetzwerkes im Notfall oder bei Strom-/Spannungsnetzschwankungen.

Einige der Subnetzwerke/-systeme der Druckmaschine verfügen zudem über elektro-optische Bedientafeln wie LCD- oder Touch-Screen-Bedienelemente, die eine Vorortsteuerung und Überwachung an den damit ausgerüsteten Druckmaschinenanlagenkomponenten durch einen Bediener in dergleichen Weise erlauben, wie dies am zentralen Leitstand der Druckmaschine durch das Leitstandbedienpersonal für dieses Subnetzwerk möglich ist.

Damit ist vorteilhaft gewährleistet, dass eine lokale Überwachung und Steuerung im Schadensfall an der jeweiligen Maschinenkomponente durch einen Servicetechniker oder Operator erfolgen kann. In diesem Fall wird an einem zentralen Leitstand der Druckmaschine der Operatoreingriff in der Druckmaschinenanlagenkomponente dem dortigen Bedienerpersonal visualisiert.

## Patentansprüche

1. Druckmaschine mit einem Datennetzwerk zur Übertragung von Steuerungsund Regelungsfunktionen für Druckmaschinenkomponenten, **dadurch gekennzeichnet, dass** das Datennetzwerk mindestens zwei autarke und redundant ausgelegte Subnetzwerke aufweist, die via Hauptringbus miteinander in Wirkverbindung stehen.

2. Druckmaschine mit einem Datennetzwerk nach Anspruch 1, **dadurch gekennzeichnet, dass** die Subnetzwerke jeweils über einen parametrierbaren Netzwerkschalter mit dem Hauptringbus in elektronischer und/oder elektrooptischer Wirkverbindung stehen.

3. Druckmaschine mit einem Datennetzwerk nach Anspruch 2, **dadurch gekennzeichnet, dass** der Netzwerkschalter ein Ethernet-Switch ist.

4. Druckmaschine mit einem Datennetzwerk nach einem der vorhergehenden Ansprüche, **dadurch gekennzeichnet, dass** das Datennetzwerk mit einem parametrierbaren Ringbusmanager in elektronischer und/oder elektrooptischer Wirkverbindung steht.

5. Druckmaschine mit einem Datennetzwerk nach einem der vorhergehenden Ansprüche, **dadurch gekennzeichnet, dass** jeder Druckturm der Druckmaschine in einer jeweiligen Druckebene mit einem autark und redundant ausgelegten Subnetzwerk für die elektronische bzw. elektro-optische Steuerung, Regelung und Überwachung desselben ausgelegt ist.

6. Druckmaschine mit einem Datennetzwerk nach einem der vorhergehenden Ansprüche, **dadurch gekennzeichnet, dass** die jeweiligen Subnetzwerke der Druckmaschinenkomponenten abhängig von der gewählten Netzwerktopologie mit AS-Interface und/oder Profibus, insbesondere Profibus DP und/oder Instabus und/oder Industrial Ethernet ausgelegt sind und über Lichtwellenleiter mit dem Hauptringbus verbunden sind

7. Druckmaschine mit einem Datennetzwerk nach einem der vorhergehenden Ansprüche, **dadurch gekennzeichnet, dass** jedes der Subnetzwerke der Druckmaschinenkomponente über eine eigenständige und unterbrechungsfreie Strom-Spannungs-Versorgung verfügt.

8. Druckmaschine mit einem Datennetzwerk nach einem der vorhergehenden Ansprüche, **dadurch gekennzeichnet, dass** die Subnetzwerke/-systeme der Druckmaschine über elektro-optische Bedientafeln, insbesondere LCD-oder Touch-Screen-Bedienelemente, verfügen.

9. Druckmaschine mit einem Datennetzwerk nach Anspruch 8, **dadurch gekennzeichnet, dass** eine Vorort-Steuerung und Überwachung an den Druckmaschinenanlagenkomponenten durch einen Bediener erfolgt.

10. Druckmaschine mit einem Datennetzwerk nach einem der Ansprüche 8 bis 9, **dadurch gekennzeichnet, dass** einem zentralen Leitstand der Druckmaschine der Operatoreingriff an der Druckmaschinenanlagenkomponente visualisiert wird.
